# EUROPEAN PATENT SPECIFICATION

(11) **EP 1 492 696 B1**
(45) Date of publication and mention of the grant of the patent: **25.05.2011**
(21) Application number: 02798029.1
(22) Date of filing: 13.09.2002
(51) Int. Cl.: B62J 15/02

(54) **DEVICE FOR FASTENING A BICYCLE MUDGUARD COMPRISING TWO INTERCONNECTED ELEMENTS**
VORRICHTUNG ZUR BEFESTIGUNG EINES FAHRRADSCHUTZBLECHS MIT ZWEI MITEINANDER VERBUNDENEN ELEMENTEN
DISPOSITIF DE FIXATION D'UN GARDE-BOUE DE BICYCLETTE COMPRENANT DEUX ELEMENTS INTERCONNECTES

(30) Priority: 13.09.2001 IT VR20010099
(43) Date of publication of application: 05.01.2005
(60) Divisional application: 09000269.2
(73) Proprietor: Karl Scheffer-Klute GmbH & Co. KG, 59846 Sundern (DE)
(72) Inventor: ARGENTI, Marco, I-31033 Castelfranco Veneto (IT); TOSO, Enrico, I-31033 Castelfranco Veneto (IT)
(74) Representative: Reniero, Cirillo Silvano
(86) International application number: PCT/IT2002/000583
(87) International publication number: WO 2003/022669

(56) References cited:
- EP-A- 0 742 137
- EP-A- 0 934 870
- EP-A- 1 036 731
- EP-A- 1 052 167
- DE-U- 20 008 005
- DE-U- 29 614 001

## Description

### TECHNICAL FIELD

This invention concerns a clamping device for a bicycle mudguard which is able to provide firm and long-term fixing of the mudguard to its support rods by means of two interconnecting elements which form a simple, economic and secure fixing solution both during assembly of the bicycle and during its use.

This invention is particularly applicable in the bicycle and bicycle component manufacturing sector.

### BACKGROUND ART

Numerous devices are known to the background art which are designed to fix a bicycle mudguard to the respective rods used to support the mudguard, these rods generally being integral with the fork of the bicycle frame or connected directly to the hub of the wheel associated with the mudguard.

The Italian patent application no. VI95A000076 in the name of the same applicant describes, for example, a clamping system consisting of a plastic support element with an appropriate groove in which the edge of the mudguard to be fixed is inserted.

This element is also equipped with a pair of holes, designed for the insertion of a pair of support rods, and an additional hole positioned perpendicularly to the rod holes and in such a way as to come out inside the groove.

During the mudguard assembly procedure, the mudguard is held in position by means of a self-tapping screw inserted in this last hole. The tightening of this screw perforates the mudguard and fixes it to the support element.

This tightening also leads to a partial deformation of the plastic support element, which also allows the definitive fixing of the rods to this support element.

This clamping device, however, requires precise positioning of the holes mentioned above and, therefore, careful preparation and use of the moulds. It also necessitates the use of mechanical fixing means, such as for example self-tapping screws which require perforation of the mudguard.

Moreover, since this device is equipped with a pair of rod insertion holes which are not aligned with the median axis, it is asymmetrical and in order to be assembled correctly respective right and left elements must be prepared, thus increasing the moulding and stock costs.

While ensuring secure fixing and thus a good end result, such a device is not economical and not easy to manufacture.

Another document, patent application no. VR98U000039 also in the name of the same applicant, describes a plastic support element consisting of two more or less symmetrical parts joined together at one end and shaped in such a way that their joining forms a groove in which the outer edge of the mudguard is positioned, the full thickness of the mudguard being held in place by a projection.

The support element can be manufactured by using a single mould from which two separate parts are obtained, joined together at one end, like the valves of a shell, so that they can be clamped by fitting them together.

The two parts are joined together by mechanical coupling means, such as for example a self-tapping screw inserted in a hole positioned transversely to the block which is not however involved with the groove designed for the positioning and clamping of the mudguard edge.

The support element of the device described in VR98U000039 is also equipped with holes designed to house the mudguard support rods which are generally integral at their other end with the fork of the bicycle frame or with the wheel hub.

The device described in the document VR98U000039 does however present various limitations including that of being not particularly effective in holding the mudguard in place.

In fact, the mudguard is only held in place by the hindrance created by the projection inside the groove, where this projection is made from the same .plastic material forming the block.

Moreover, since both the element described in VI95000076 and the one described in VR98U000039 are single blocks, the material from which they are made is unable to satisfy on one hand the need to resist the tearing stress that the mudguard may be subjected to and at the same time allow optimum gripping of the support rod inserted in it.

Another limitation of the previously described systems is the lack of protection for the ends of the mudguard support rods which are usually cut with industrial systems that leave sharp edges or burs that can be the cause of injuries during mudguard assembly or when the bicycle is used if they have not been adequately protected.

DE-296 14 001 U discloses a single body arrangement for fixing a lateral strut of a bicycle mudguard 1 and is considered the closest prior art.

### DESCRIPTION OF THE INVENTION

This invention proposes to overcome the drawbacks and disadvantages typical of the known background art, and to therefore provide a clamping device by means of two adjacent and cooperating elements able to form, in a simple and economic way, a firm and long-term fixing solution of a bicycle mudguard to its respective support rods, covering their respective ends safely.

This invention also proposes to provide a clamping device that forms a perfectly symmetrical system, in which the individual pieces can be used indifferently on the right or left of the mudguard, thereby considerably reducing the moulding and stock costs.

This is achieved by means of the device with the features described in the main claim.

The dependent claims describe particularly advantageous embodiments of this invention.

In accordance with a first embodiment of the clamping device according to the invention, there is a first element which presents a chamber designed to house the mudguard support rod, covering it like a cap and being long enough to allow longitudinal adjustment of the rod with respect to the device with a certain amount of play.

This first element also presents a hole designed to house a screw, or any other mechanical coupling means, for example a self-tapping screw.

In addition to this first element, in accordance with the invention there is a second element adjacent to and cooperating with the first element and which presents an appropriate groove inside which the edge of the mudguard is positioned.

The second element also presents a hole designed to house a screw or any other mechanical coupling means and aligned with the hole of the first element thus allowing, according to a particular embodiment, the fixing and connection of the two elements.

According to a particular embodiment, this screw can also fix the mudguard housed in the groove, for example by perforating it.

It therefore seems evident that in accordance with the embodiments described, the clamping device according to this invention makes it possible to achieve optimum fixing of a bicycle mudguard to its support rods, and the non-removable cap-shape makes the system particularly safe and accident-proof both during assembly and during the use of the bicycle.

This type of clamping does in fact ensure safe and firm positioning of the mudguard also in the event of accidental knocks.

### DESCRIPTION OF THE DRAWINGS

Other features and advantages of the invention will become evident on reading the following description of embodiments of the invention, given as non-binding examples, with the help of the enclosed drawings, in which:
- figure 1 shows a vertical cross-section of the two interconnected elements, seen from the side, at the level of the hole for the fixing means;
- figure 2 shows a vertical cross-section of the first element, seen from the side, at the level of the chamber housing the rod;
- figure 3 shows a vertical cross-section of the first element, seen from the front, at the level of the hole housing the rod;
- figure 4 shows a vertical cross-section of the first element, seen from the front, at the level of the hole for the fixing means;
- figure 5 shows a horizontal cross-section of the first element, seen from above, at the level of the hole for the fixing means;
- figure 6 shows the face of the second element adjacent to and cooperating with the first element;
- figure 7 shows a longitudinal cross-section of the second element, seen from above, at the level of the hole for the fixing means;
- figure 8 shows a vertical cross-section of the second element, seen from the side, at the level of the hole for the fixing means;

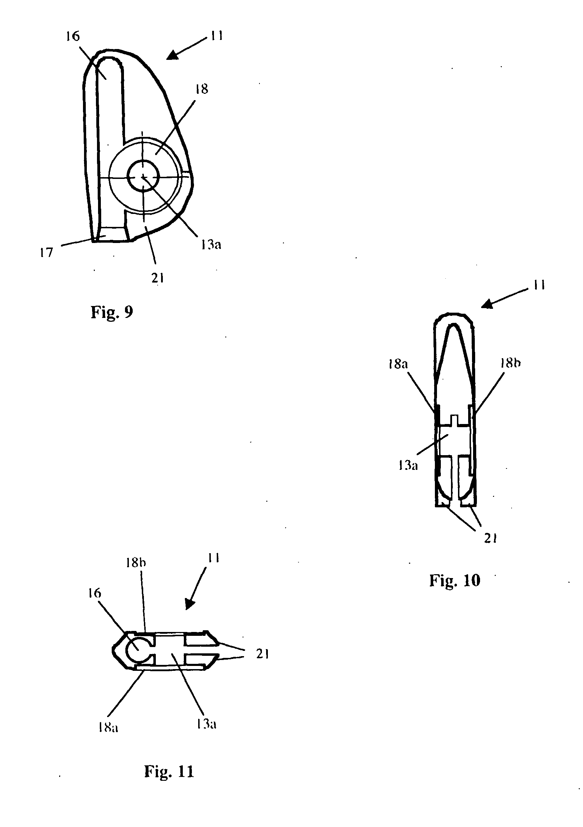

- figure 9 shows a vertical cross-section of the first element, seen from the side, at the level of the chamber housing the rod with a cut relative to the expanded part presenting the hole 13a;
- figure 10 shows a vertical cross-section of the first element, seen from the front, at the level of the hole for the fixing means with a cut relative to the expanded part presenting the hole 13a;
- figure 11 shows a horizontal cross-section of the first element, seen from above, at the level of the hole for the fixing means with a cut relative to the expanded part presenting the hole 13a.

### DESCRIPTION OF ONE EMBODIMENT

In the figures the reference number 10 indicates a clamping device for a bicycle mudguard according to this invention.

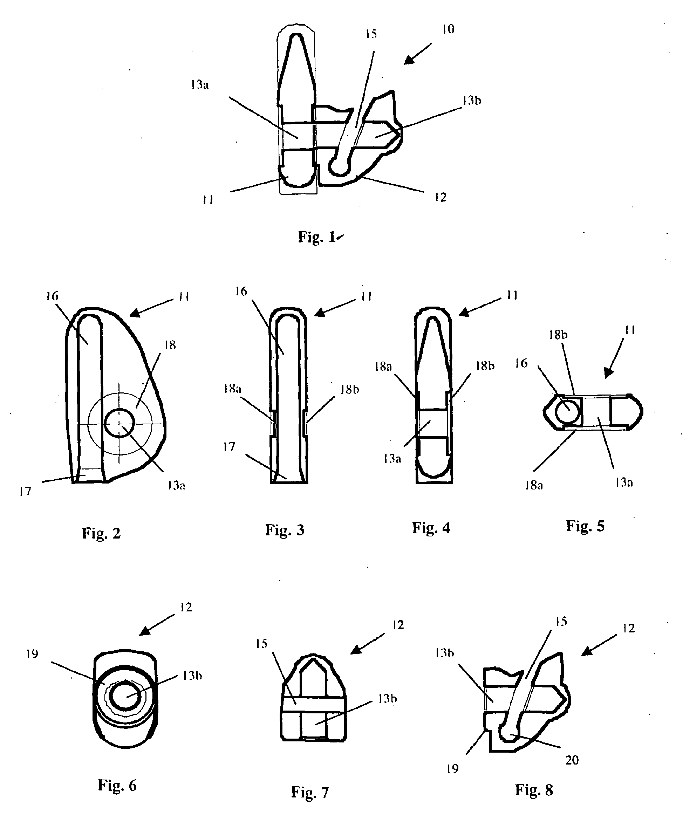

In accordance with the embodiment shown in figure 1, the clamping device 10 consists of a first element 11 .adjacent to and cooperating with a second element 12. Both these elements are formed with a hole 13a and 13b, respectively, positioned on the same axis and designed to house a screw or any other mechanical coupling means, e.g. a self-tapping screw.

According to a particular embodiment, this screw can also fix the mudguard housed in the groove 15 formed in the second element 12, e.g. by perforating it.

In addition to the hole 13a, the first element 11 as shown in figure 2 delimits a chamber 16. designed to house a support rod for the mudguard, by engaging it like a cap.

According to a particular, embodiment, the entry opening 17 to the chamber 16 is flared, thereby allowing easy insertion of the support rod into the chamber 16.

In addition, chamber 16 according to this invention is long enough to make it possible for the support rod to be inserted vertically into it with a certain degree of play; this permits fine adjustment of the distance of the fixing device, and thus of the mudguard, with respect to the wheel hub.

Both sides of the element 11 according to this invention is formed with convex circular slits or recesses 18, 18a, 18b around the hole 13a for housing, on one side, thereof the head of a screw or any other suitable fixing means, and on the other to allow cooperation with a circular part 19 of the second element shown in figures 6 and 8.

Figures 3 and 4 also show the first element 11, in cross-section, according to the particular embodiment described.

In detail, figure 3 shows the flared entry opening 17 for inserting the rod into the chamber 16, whereas figure 4 clearly shows the hole 13a through which the fixing means extends, and the slits 18a and 18b designed to cooperate in the fixing stage either with the outer part of the fixing means or with the protruding circular part .19 of the second element 12 forming a butt type joint.

According to a particular embodiment of this invention the second element 12 comprises a hole 13b designed to house a fixing means, e.g. a self-tapping screw, which extends through the groove 15 in which the edge of a mudguard is housed as shown in figure 8.

The fixing means, extending through the hole 13b and through the groove 15, can perforate the mudguard thereby fixing it firmly to the element 12, and more generally to the whole device 10 as well as to the rod connected to the wheel hub.

According to another variation the mudguard is formed with a hole for the insertion into it of the fixing means and its edge can engage, for example by means of a snap- or bayonet-coupling, with the element 12 thanks to the housing 20 for the edge of the mudguard as shown in figure 8.

An advantageous embodiment of the fixing system 10. according to the invention envisages the construction of the two elements 11 and 12 with different types of plastic material that have technical features that are more suitable for carrying out the functions necessary to these elements 11 and 12.

By way of example, the element 11 can be made of soft and rubbery material such as butyl rubber or of nylon arranged to hold the rod inside the chamber 16 thanks to better gripping, whereas element 12 can be made of a relatively rigid material suitable for withstanding tearing stress, e.g. polyvinyl chloride.

In any case, the materials mentioned above do not constitute a limitation to the purposes of the invention, which can easily be implemented by using any type of material suitable for achieving the required technical effect.

According to another variation, the device 10 can be constructed giving the elements 11 and 12 different colours such as, for example, by making the element 11, in view, of a transparent material and the element 12 connected to the mudguard of black plastic material, thus giving the invention a speficic esthetic effect.

The invention is described above with reference to some preferred embodiments of the invention.

It should be understood, however, that the invention is not limited to the above described embodiments, but comprises any modifications and variations considered to be within the scope of the invention as defined by the claimes.

By way of example, embodiments are envisaged whereby the first element that houses the rod is rotated with respect to the vertical, in the case in which the rod is fixed to a parcel-rack of the bicycle rather than to a hub.

A further particularly advantageous embodiment of the invention envisages a cut in the first element 11 at the level of the lower edge of the expanded part presenting the hole 13a, which advantageously divides the expanded part of the first element 11 into two wings 21 which are arranged for example a few millimetres apart. The cut advantageously extends from the edge opposite to the chamber 16 to as far as the chamber 16 itself, internally following the circular slits 18a, 18b on the outside of the first element 11. The tightening action of the screw extending through the hole 13a thus acts, owing to the wings 21, also on the chamber 16 and consequently on the rod inserted in it, thereby preventing its extraction.

## Claims

1. A clamping device for the mudguard of a bicycle **characterised in that** it comprises a first element (11) which delimits at least one essentially closed chamber (16) designed to house the end of a mudguard support rod and a first hole (13a) designed to house a suitable mechanical coupling means, and a second element (12), adjacent to and cooperating with the first element (11), which is formed with a groove (15) in which the edge of the mudguard can be fixed and a second hole (13b) designed to house the mechanical coupling means, the second hole (13b) being aligned with respect to the first hole (13a) of the first element (11) thus allowing the connection of the first element (11) to the second element (12).

2. A clamping device according to claim 1, **characterised in that** the chamber (16) in the first element (11) is long enough to permit fine longitudinal adjustment of the position of the rod.

3. A clamping device according to anyone of the preceding claims, **characterised in that** by crossing the groove (15) of the second element (12) at least one screw or any other mechanical coupling means fixes the mudguard to the second element (12), e.g. by perforating it.

4. A clamping device according to anyone of the preceding claims, **characterised in that** the first element (11) cooperates with the second element (12) with a coupling system for example of the butt type formed by a circular slit (18) on the first element (11) designed to cooperate in the fixing stage with a conjugated protruding portion (19) of the second element (12).

5. A clamping device according to anyone of the preceding claims, **characterised in that** the second element (12) is equipped with a coupling system for example a snap- or bayonet-coupling formed by the housing (20) for the edge of the mudguard in order to fix the mudguard inserted in the groove (15).

6. A clamping device according to anyone of the preceding claims, **characterised in that** the first element (11) and the second element (12) are made of different materials.

7. A clamping device according to claim 6, **characterised in that** the first element (11) is made of plastic material with good gripping properties, e.g. butyl rubber or polyamide resin.

8. A clamping device according to claim 6, **characterised in that** the second element (12) is made of rigid plastic material with good resistance to tearing stress, e.g. polyvinyl chloride.

9. A clamping device according to anyone of the preceding claims, **characterised in that** the first element (11) and the second element (12) are of different colours.

10. A clamping device according to anyone of the preceding claims, **characterised in that** the mechanical coupling means designed to fix at least the first element (11) to the second element (12) and to fix a mudguard positioned in the groove (15) of the second element (12) is a self-tapping screw.

11. A clamping device according to anyone of the preceding claims, **characterised in that** the chamber (16) is closed at one end and engages the end of the rod like a cap.

12. A clamping device according to anyone of the preceding claims, **characterised in that** the .first element (11) is mounted in such a way that the chamber (16) is aligned with the support rod, also in the case whereby the rod is not fixed to the hub but to another part of the bicycle.

13. A clamping device (10) according to anyone of the preceding claims, **characterised in that** the first element (11) comprises a cut at the level of the lower edge of the expanded part presenting the hole (13a), which divides the expanded part into two wings (21) which are arranged a certain distance apart, this cut extending from the edge of the first element (11) opposite the chamber (16) to the chamber (16) itself.

## Patentansprüche

1. Klemmvorrichtung für das Schutzblech eines Fahrrads, **dadurch gekennzeichnet, dass** sie aufweist: ein erstes Element (11), das mindestens eine im Wesentlichen geschlossene Kammer (16), die dazu bestimmt ist, das Ende eines Schutzblechhaltestabs aufzunehmen, und ein erstes Loch (13a) begrenzt, das dazu bestimmt ist, eine geeignete mechanische Kopplungseinrichtung aufzunehmen, und ein zweites Element (12), das dem ersten Element (11) benachbart ist und mit ihm zusammenarbeitet, das mit einer Nut (15), in der die Kante des Schutzblechs befestigt werden kann, und einem zweiten Loch (13b) ausgebildet ist, das dazu bestimmt ist, die mechanische Kopplungseinrichtung aufzunehmen, wobei das zweite Loch (13b) bezüglich des ersten Lochs (13a) des ersten Elements (11) ausgerichtet ist, wodurch die Verbindung des ersten Elements (11) mit dem zweiten Element (12) ermöglicht wird.

2. Klemmvorrichtung nach Anspruch 1, **dadurch gekennzeichnet, dass** die Kammer (16) im ersten Element (11) lang genug ist, um eine longitudinale Feineinstellung der Position des Stabs zu ermöglichen.

3. Klemmvorrichtung nach einem der vorhergehenden Ansprüche, **dadurch gekennzeichnet, dass** mindestens eine Schraube oder irgendeine andere mechanische Kopplungseinrichtung durch Kreuzen der Nut (15) des zweiten Elements (12) das Schutzblech am zweiten Element (12) befestigt, indem sie es z.B. perforiert bzw. durchdringt.

4. Klemmvorrichtung nach einem der vorhergehenden Ansprüche, **dadurch gekennzeichnet, dass** das erste Element (11) mit dem zweiten Element (12) mit einem Kopplungssystem, zum Beispiel des Stummeltyps bzw. Muffentyps zusammenarbeitet, das durch einen kreisförmigen Schlitz (18) am ersten Element (11) gebildet wird, der dazu bestimmt ist, im Befestigungsstadium mit einen konjugierten vorstehenden Abschnitt (19) des zweiten Elements (12) zusammenzuarbeiten.

5. Klemmvorrichtung nach einem der vorhergehenden Ansprüche, **dadurch gekennzeichnet, dass** das zweite Element (12) mit einem Kopplungssystem zum Beispiel einer Schnapp- oder Bajonettkopplung ausgestattet ist, die durch das Gehäuse (20) für die Kante des Schutzblechs ausgebildet ist, um das in die Nut (15) eingesetzte Schutzblech zu befestigen.

6. Klemmvorrichtung nach einem der vorhergehenden Ansprüche, **dadurch gekennzeichnet, dass** das erste Element (11) und das zweite Element (12) aus unterschiedlichen Materialien bestehen.

7. Klemmvorrichtung nach Anspruch 6, **dadurch gekennzeichnet, dass** das erste Element (11) aus einem Weichplastikmaterial mit guten Griffeigenschaften, z.B. Butylgummi bzw. Butylkautschuk oder Polyamidharz besteht.

8. Klemmvorrichtung nach Anspruch 6, **dadurch gekennzeichnet, dass** das zweite Element (12) aus einem Hartplastikmaterial mit einer guten Beständigkeit gegenüber einer Reißbelastung, z.B. Polyvinylchlorid, besteht.

9. Klemmvorrichtung nach einem der vorhergehenden Ansprüche, **dadurch gekennzeichnet, dass** das erste Element (11) und das zweite Element (12) unterschiedliche Farben aufweisen.

10. Klemmvorrichtung nach einem der vorhergehenden Ansprüche, **dadurch gekennzeichnet, dass** die mechanische Kopplungseinrichtung, die dazu bestimmt ist, mindestens das erste Element (11) am zweiten Element (12) zu befestigen und ein in der Nut (15) des zweiten Elements (12) angeordnetes Schutzblech zu befestigen, eine Schneidschraube bzw. Blechschraube ist.

11. Klemmvorrichtung nach einem der vorhergehenden Ansprüche, **dadurch gekennzeichnet, dass** die Kammer (16) an einem Ende geschlossen ist und mit dem Ende des Stabs wie eine Kappe in Eingriff tritt.

12. Klemmvorrichtung nach einem der vorhergehenden Ansprüche, **dadurch gekennzeichnet, dass** das erste Element (11) auf eine solche Weise angebracht ist, dass die Kammer (16) mit dem Haltestab ausgerichtet ist, auch in dem Fall, wobei der Stab nicht an der Nabe sondern an einem anderen Teil des Fahrrads befestigt ist.

13. Klemmvorrichtung (10) nach einem der vorhergehenden Ansprüche, **dadurch gekennzeichnet, dass** das erste Element (11) einen Einschnitt in den Höhe der Unterkante des erweiterten Teils aufweist, der das Loch (13a) präsentiert, der den erweiterten Teil in zwei Flügel (21) unterteilt, die in einem bestimmten Abstand entfernt voneinander angeordnet sind, wobei sich dieser Einschnitt von der Kante des ersten Elements (11), die der Kammer (16) gegenüberliegt, zur Kammer (16) selbst erstreckt.

## Revendications

1. Dispositif de serrage pour le garde-boue d'une bicyclette, **caractérisé en ce qu'**il comprend un premier élément (11), délimitant au moins une chambre (16) essentiellement fermée, conçue pour loger l'extrémité d'une tige support de garde-boue, et un premier trou (13a), conçu pour loger des moyens d'accouplement mécanique appropriés, et un deuxième élément (12), adjacent au, et coopérant avec le premier élément (11), formé avec une gorge (15) dans laquelle le bord du garde-boue peut être fixé, et un deuxième trou (13b), conçu pour loger les moyens d'accouplement mécanique, le deuxième trou (13b) étant aligné par rapport au premier trou (13a) du premier élément (11), permettant ainsi la connexion du premier élément (11) au deuxième élément (12).

2. Dispositif de serrage selon la revendication 1, **caractérisé en ce que** la chambre (16), située dans le premier élément (11), est suffisamment longue pour permettre un ajustement longitudinal fin de la position de la tige.

3. Dispositif de serrage selon l'une quelconque des revendications précédentes, **caractérisé en ce que**, en croisant la gorge (15) du deuxième élément (12), au moins une vis, ou tout moyen d'accouplement mécanique, fixe le garde-boue au deuxième élément (12), par exemple en le perforant.

4. Dispositif de serrage selon l'une quelconque des revendications précédentes, **caractérisé en ce que** le premier élément (11) coopère avec le deuxième élément (12), avec un système d'accouplement, par exemple du type bout à bout, formé par une fente (18) circulaire réalisée sur le premier élément (11), conçue pour coopérer, à l'étape de fixation, avec une partie en saillie (19) conjuguée du deuxième élément (12).

5. Dispositif de serrage selon l'une quelconque des revendications précédentes, **caractérisé en ce que** le deuxième élément (12) est muni d'un système d'accouplement, par exemple un accouplement à encliquetage ou à baïonnette, formé par le boîtier (20) pour le bord du garde-boue, de manière à fixer le garde-boue inséré dans la gorge (15).

6. Dispositif de serrage selon l'une quelconque des revendications précédentes, **caractérisé en ce que** le premier élément (11) et le deuxième élément (12) sont formés de matériaux différents.

7. Dispositif de serrage selon la revendication 6, **caractérisé en ce que** le premier élément (11) est formé de matière plastique souple, ayant de bonnes propriétés de préhension, par exemple du caoutchouc au butyl ou de la résine de polyamide.

8. Dispositif de serrage selon la revendication 6, **caractérisé en ce que** le deuxième élément (12) est formé de matière plastique rigide, présentant une bonne résistance sous une contrainte de déchirement, par exemple du polychlorure de vinyle.

9. Dispositif de serrage selon l'une quelconque des revendications précédentes, **caractérisé en ce que** le premier élément (11) et le deuxième élément (12) sont de couleurs différentes.

10. Dispositif de serrage selon l'une quelconque des revendications précédentes, **caractérisé en ce que** les moyens d'accouplement mécanique, conçus pour fixer au moins le premier élément (11) au deuxième élément (12), et pour fixer un garde-boue positionné dans la gorge (15) du deuxième élément (12), sont constitués d'une vis autotaraudeuse.

11. Dispositif de serrage selon l'une quelconque des revendications précédentes, **caractérisé en ce que** la chambre (16) est fermée à une extrémité et vient en prise avec l'extrémité de la tige, comme un capuchon.

12. Dispositif de serrage selon l'une quelconque des revendications précédentes, **caractérisé en ce que** le premier élément (11) est monté de manière que la chambre (16) soit alignée avec la tige support, également dans le cas dans lequel la tige n'est pas fixée au moyeu, mais à une autre partie du véhicule.

13. Dispositif de serrage (10) selon l'une quelconque des revendications précédentes, **caractérisé en ce que** le premier élément (11) comprend une découpure au niveau du bord inférieur de la partie expansée présentant le trou (13a), divisant la partie expansée en deux ailes (21) agencées à une certaine distance l'une de l'autre, cette découpure allant du bord du premier élément (11), opposé à la chambre (16), à la chambre (16) elle-même.
